# EUROPÄISCHE PATENTANMELDUNG

(11) **EP 1 349 108 A1**
(43) Veröffentlichungstag der Anmeldung: **01.10.2003**
(21) Anmeldenummer: 02405244.1
(22) Anmeldetag: 27.03.2002
(51) Int. Cl.: G06K 19/06, G06K 7/10, B65H 39/04, B42D 15/00

(54) **Verfahren zur Verarbeitung von Druckprodukten, nach diesem Verfahren hergestelltes Druckprodukt sowie Anlage zur Durchführung des Verfahrens**

(71) Anmelder: Grapha-Holding AG, 6052 Hergiswil (CH)
(72) Erfinder: Boos, Konrad, 8370 Sirnach TG (CH); Geiser, Peter, 9548 Matzingen (CH)

(57) **Zusammenfassung**

Das Verfahren erfolgt in einer Druck-Weiterverarbeitungsanlage (1), in der jedes Druckprodukt (13) mit einem maschinell lesbaren Code (30) versehen wird. Dieser Code (30) wird jeweils visuell nicht erkennbar, jedoch maschinell lesbar auf einer Aussenseite des Druckproduktes (13) aufgebracht oder es wird ein visuell erkennbarer Code (30) während der Weiterverarbeitung wieder entfernt. Der Code (30) besteht vorzugsweise aus Punkten (31), die so klein sind, dass sie visuell nicht oder kaum erkennbar sind. Da der Code (30) auf dem Druckprodukt (13) visuell nicht erkennbar oder entfernt ist, kann die Aussenseite ohne störende Bereiche bedruckt und damit graphisch benutzt werden. Dennoch ist ein sogenanntes "selective binding" mit hoher Funktionssicherheit möglich.

## Beschreibung

Die Erfindung betrifft ein Verfahren zur Produktion von nach gespeicherten oder eingegebenen Daten hergestellten Druckprodukten ähnlicher Art, die zu ihrer Identifikation mit einem maschinell lesbaren Code versehen sind.

Die industrielle Herstellung gleichartiger Druckprodukte in Druck-Weiterverarbeitungsanlagen ist seit langem bekannt. Solche Druckprodukte sind insbesondere Kataloge oder Zeitschriften, die bekanntlich in sehr hohen Stückzahlen hergestellt und versandt werden. Solche Druck-Weiterverarbeitungsanlagen weisen in der Produktelinie insbesondere eine Zusammentragmaschine, einen Klebebinder oder eine Heftmaschine, eine Schneidmaschine, beispielsweise einen Dreischneider sowie einen Stapler auf.
Mit solchen Weiterverarbeitungsanlagen können grosse Serien gleichartiger Druckprodukte hergestellt werden, die sich beispielsweise in der Beschriftung und/oder im Inhalt und/oder in den Beilagen unterscheiden. Diese Produktionen sind auch unter dem Begriff "selective binding" bekannt. Die wahlweise zusammengestellten Druckprodukte sind hierbei speziell auf einen Empfänger ausgerichtet. Es können einzelne Teile weggelassen werden, die für einen Empfänger nicht relevant sind. Hierfür ist eine Datenbank erforderlich, welche die empfängerbezogenen Daten in aufbereiteter Form verfügbar macht, damit das für einen Empfänger zu fertigende Produkt eindeutig definiert werden kann.
Durch eine sinnvolle Wahl der Herstellreihenfolge ist es sogar möglich, die Druckprodukte in der Reihenfolge herzustellen, wie sie vom Postboten auf seiner klar definierten Route in die Briefkästen zu legen sind. Eine solche Reihenfolge wird als "postroutengerecht" bezeichnet. Durch eine entsprechende Vorsortierung der Datensätze und Einhaltung der Reihenfolge während der Produktion entfallen Arbeiten während der Postverteilung. Diese Einsparungen werden in Form von tieferen Tarifen dem Produzenten der Druckprodukte vergütet.

Das "selective binding" weist somit insbesondere die folgenden Vorteile auf:
- für jeden Empfänger kann ein auf ihn abgestimmtes Druckexemplar hergestellt werden,
- es können auf den Empfänger abgestimmte Beilagen zu- oder aufgelegt werden
- während der Produktion können die Druckprodukte mit persönlichen Mitteilungen bedruckt werden,
- nicht relevante Teile der Druckprodukte können bei bestimmten Empfängern weggelassen und damit Kosten gespart werden und
- es können Posttaxen eingespart werden.

Damit ein "selective binding" möglich ist, muss die Steuerung der Weiterverarbeitungsanlage jederzeit wissen, welches Druckprodukt sich wo in der Verarbeitungslinie befindet. Ist dies nicht gewährleistet, so besteht die Gefahr, dass Druckprodukte falsch strukturiert und adressiert werden und beispielsweise auf der Zeitschrift für Herrn Müller die Anschrift von Herrn Meier steht. Es versteht sich von selbst, dass ein solcher Fehler auf keinen Fall vorkommen darf.

"Selective binding" erfordert somit eine Produkteverfolgung. Damit diese gewährleistet sein soll, ist es bekannt, jedes Druckprodukt einer Zelle einer Transportkette zuzuordnen. Die Zellen werden an Verarbeitungsstationen vorbeigeführt, wobei die Anlagensteuerung die Positionen der Zellen kennt und annimmt, dass sich in jeder Zelle das zugeordnete Druckprodukt befindet. Bekannt ist es zudem, auf dem Umschlag der Druckprodukte jeweils einen Barcode aufzudrucken, der das Druckprodukt identifiziert. Es gibt jedoch viele Druckprodukte, bei denen ein aufgedruckter Barcode nicht erwünscht oder störend ist.

Der Erfindung liegt die Aufgabe zugrunde, ein Verfahren der genannten Art zu schaffen, das die genannten Nachteile vermeidet, funktionssicher und kostengünstig ist.

Die Aufgabe ist bei einem gattungsgemässen Verfahren dadurch gelöst, dass eine Aussenseite der Druckprodukte mit einem visuell nicht erkennbaren, jedoch maschinell lesbaren Code versehen wird oder dass ein visuell erkennbarer Code aufgedruckt wird, der bei der Weiterverarbeitung wieder entfernt wird. Ein nach diesem Verfahren hergestelltes Druckprodukt enthält somit einen visuell nicht sichtbaren Code oder keinen Code und kann ohne Einschränkung auf der Vorder- und Rückseite bedruckt werden. Die graphische Gestaltung wird nicht wie bisher durch einen aufgedruckten Barcode beeinträchtigt.

Ein besonders geeigneter Code besteht gemäss einer Weiterbildung der Erfindung aus einer Mehrzahl von Punkten, die so klein sind, dass sie visuell nicht sichtbar sind. Solche Punkte können jedoch ohne weiteres maschinell gelesen werden. Diese Punkte können beispielsweise in einer Matrix angeordnet sein.

Nach einer besonderen Weiterbildung der Erfindung ist der Code mittels einer visuell nicht sichtbaren Tinte gedruckt.

Vorzugsweise ist eine solche Tinte UV- oder IR-reflektierend ausgebildet. Auch solche Tinten sind visuell nicht oder kaum sichtbar, können aber maschinell ohne weiteres gelesen werden.

Nach einer Weiterbildung der Erfindung ist der Code mit einer löschbaren Tinte aufgebracht. Solche Tinten sind bekannt. Sie können durch Wärmeeinwirkung oder mit einer geeigneten Strahlung entfernt werden. Die Codierung ist auch in diesem Fall am fertigen Druckprodukt nicht erkennbar.

Die Erfindung betrifft zudem ein nach diesem Verfahren hergestelltes Druckprodukt sowie eine Anlage zur Durchführung des Verfahrens.

Ein Ausführungsbeispiel der Erfindung wird nachfolgend anhand der Zeichnung näher erläutert.

Es zeigen:
- Fig. 1: schematisch eine erfindungsgemässe Druck-Weiterverarbeitungsanlage und
- Fig. 2: ein nach dem Verfahren hergestelltes Druckprodukt.

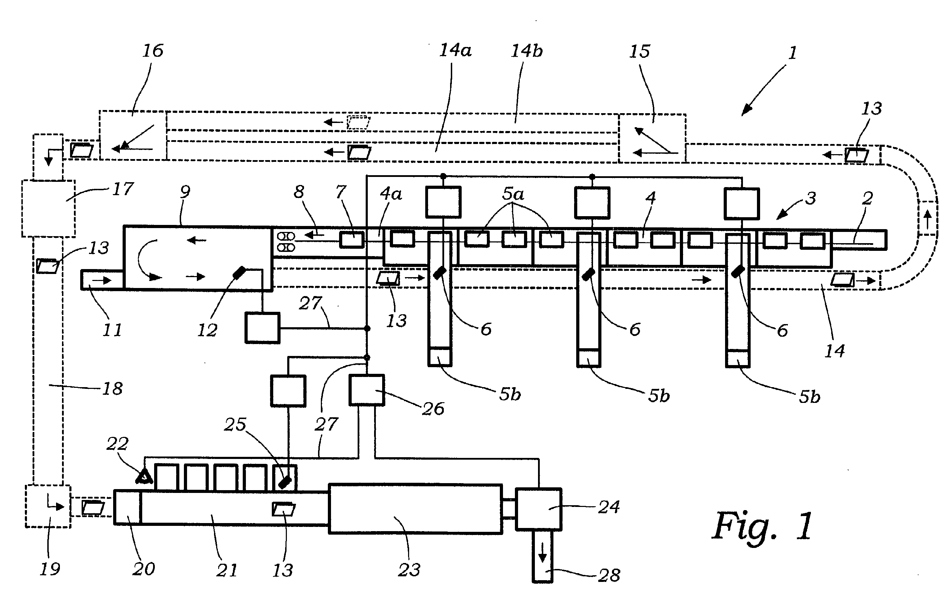

Die in Figur 1 schematisch gezeigte Druck-Weiterverarbeitungsanlage 1 weist eine Zusammentragmaschine 3 auf, die einen Sammelkanal 4 und mehrere Bogenanleger 5a/5b besitzt. Die an sich bekannten Bogenanleger 5 sind entlang des Sammelkanals 4 angeordnet. Jeder Bogenanleger 5 wird entsprechend seinem Bedarf mit hier nicht gezeigten Druckbogen manuell oder automatisch beschickt. Die Aufgabe der Bogenanleger 5 besteht darin, die Druckbogen zu vereinzeln und die aus gleichen Abschnitten bestehende hier nicht gezeigte Kette des Sammelkanals 4 taktsynchron mit diesen Druckbogen zu beschicken. Pro Maschinentakt legt die Sammelkette 2 einen exakten Abschnitt des Förderweges zurück. Dadurch ist es möglich, dass jeder Kettenabschnitt von jedem Bogenanleger 5 je einen Druckbogen erhält. Mittels einer Anlagensteuerung 26 werden die Bogenanleger 5 aktiviert bzw. deaktiviert, sodass am Ende 4a des Sammelkanals 4 ein zusammengetragenes Druckvorprodukt 7 aus den richtigen Druckbogen zusammengesetzt ist. Jeder Anleger 5b ist vorzugsweise mit einem integrierten Drucker 6 versehen, der es ermöglicht, auf den Druckbogen einen Text zu drucken, der dem entsprechenden Druckprodukt direkt zugeordnet ist. Die Druckprodukte können mit unterschiedlichen Texten bedruckt werden, die beispielsweise personen- und/oder sachgebiets- abhängig sind. Ein solcher Text kann beispielsweise für die Empfänger einer Stadt A verschieden sein von demjenigen, der für die Empfänger einer Stadt B vorgesehen ist. Das Druckvorprodukt 7 ist am Ende 4a des Sammelkanals 4 beispielsweise ein nicht gebundener Buchblock.

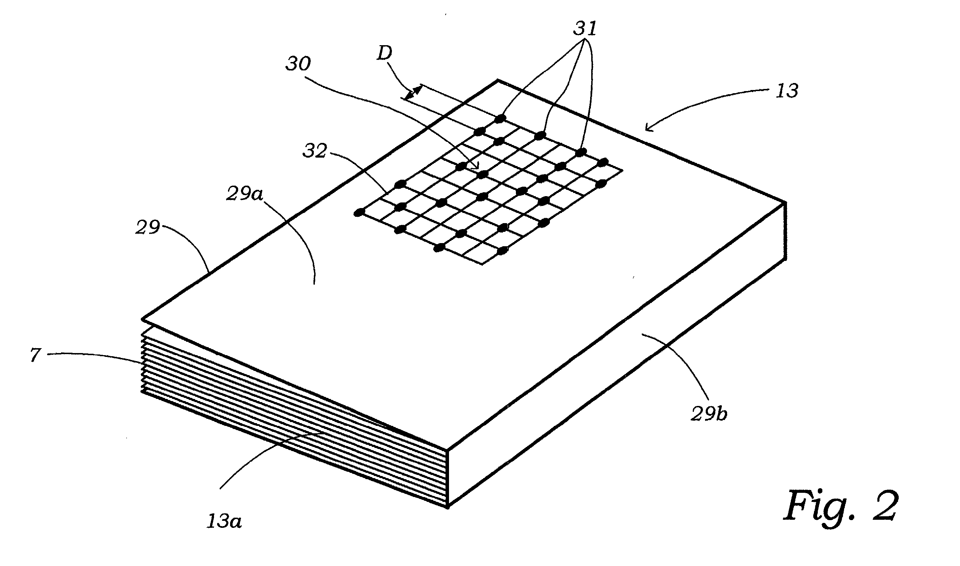

Die in der Zusammentragmaschine 3 zusammengetragenen Druckvorprodukte 7 werden in Richtung des Pfeiles 8 taktsynchron einem Klebebinder 9 übergeben. In diesem Klebebinder 9 werden in an sich bekannter Weise in einer ersten Phase die Falze am Rücken der Druckvorprodukte 7 weggefräst. Anschliessend wird der Rückenbereich durch Aufrauhen, Kerben und Bürsten für den Klebstoffauftrag vorbereitet. Nach dem Klebstoffauftrag wird mit einem Umschlaganleger 11 ein Umschlag 29 (Figur 2) an den Rücken des Buchblockes bzw. des Druckvorproduktes 7 angepresst. Soll in einer Produktion unter verschiedenen Umschlägen 29 gewählt werden können, ist der Einsatz eines Umschlaganlegers 11 mit mehreren Stationen erforderlich. Die Auswahl des entsprechenden Umschlages 29 erfolgt wiederum durch die Anlagensteuerung 26. Am Ende des Klebebinders 9 kann eine hier nicht gezeigte Ausschleusweiche vorgesehen sein, mit der mangelhafte Produkte ausgeschleust werden. Bis zum Ende des Klebebinders 9 sind die Druckvorprodukte 7 und die mit einem Umschlag 29 versehenen Druckprodukte 13 immer einem bestimmten Maschinentakt zugeordnet und für die Anlagensteuerung 26 jederzeit identifizierbar. Vor dem Ende des Klebebinders 9 ist ein Drucker 12 angeordnet, mit dem auf die Aussenseite des Umschlags 29 ein Code 30 aufgedruckt wird, der gemäss Figur 2 aus einer Mehrzahl von Punkten 31 besteht. Dieser Code 30 ist maschinell lesbar und identifiziert das Druckprodukt 13. Zusätzlich könnte mit dem selben Drucker auch ein Text, z. B. eine Adresse aufgedruckt werden. Der Drucker 12 ist über eine Steuerleitung 27 von der Anlagensteuerung 26 gesteuert, die mit einer produktebezogenen Datenbank versehen oder mit einer solchen verbunden ist. Diese Datenbank enthält die produktespezifischen Daten in aufbereiteter Form. Die Daten sind vorzugsweise in einer Herstellreihenfolge aufbereitet, die es ermöglicht, die Druckprodukte 13 in der Reihenfolge herzustellen, wie sie vom Postboten auf seiner klar definierten Route in die Briefkästen zu legen sind.

Der Code 30 bildet gemäss Figur 2 eine rechteckige Punktmatrix. Die Punkte 31 sind so klein, dass sie visuell nicht oder kaum erkennbar sind. Zudem sind die Abstände D zwischen benachbarten Punkten 31 eines Rasters 32 um ein Mehrfaches, beispielsweise mindestens um das Fünffache grösser als der Durchmesser der Punkte 31. Beim Druckprodukt 13 gemäss Figur 2 sind die Punkte 31 auf die Frontseite 29a des Umschlags 29 aufgedruckt. Der Bereich dieses Codes 30 kann ein Teilbereich der Frontseite 29a oder auch der gesamte Bereich sein. Der Code 30 könnte zudem am Rücken 29b oder an einer beschnittenen Seite 13a aufgebracht sein. Schliesslich könnte der Code 30 auf der in Figur 2 nicht gezeigten Rückseite des Umschlags 29 aufgedruckt sein. Die Punkte 31 sind so klein, dass sie als Teil einer graphischen Darstellung, beispielsweise einer fotografischen Darstellung, als solche nicht erkennbar sind und diese Darstellung visuell nicht stören. Das Vorhandensein bzw. Nichtvorhandensein eines Punktes 31 an einer Schnittstelle der Matrix kann jedoch maschinell ohne weiteres festgestellt werden. Geeignete optische Lesegeräte sind dem Fachmann bekannt. Alternativ könnte die Codierung auch mit einer Tinte vorgenommen werden, die insbesondere UV-Licht oder IR-Licht intensiv reflektiert. Eine solche Tinte ist visuell nicht sichtbar, kann aber im geeigneten Licht maschinell gelesen werden. Der Code 30 könnte zudem mit einer Tinte gedruckt werden, die löschbar ist. Solche Tinten sind bekannt. Das Löschen erfolgt beispielsweise durch Wärmeeinwirkung. Auch in diesem Fall ist der Code 30 am fertigen Produkt nicht sichtbar. Schliesslich kann der Code 30 auf einer hier nicht gezeigten Folie vorgenommen werden, derart, dass der Code 30 vom Umschlag 29 ablösbar ist.

Die mit dem Umschlag 29 und Code 30 versehenen und noch warmen Druckprodukte 13 werden einer Kühlstrecke 14 übergeben. Diese besteht aus Gründen der Einfachheit und Kosten vorzugsweise aus mehreren hier nicht gezeigten Transportbändern. Zudem kann die Kühlstrecke 14 streckenweise aus parallelen Streckenabschnitten 14a und 14b bestehen, die am Anfang und am Ende jeweils eine Weiche 15 bzw. 16 aufweisen. Der Zweck dieser zweispurigen Teilstrecke besteht darin, dass während der störungsfreien Produktion alle Produkte über den Streckenabschnitt 14a transportiert werden, während der zweite Streckenabschnitt 14b leer ist. Ereignet sich im Bereich nach der Weiche 16 eine Störung, die zu einem Stopp führt, so werden der Streckenabschnitt 14a und die Zusammentragmaschine 3 angehalten und alle noch vor der Weiche 15 ankommenden Druckprodukte 13 auf die noch leere Strecke 14b geleitet. Die Aufnahmekapazität des Streckenabschnitts 14b muss mindestens so gross sein, dass der ganze Inhalt des Klebebinders 9 darin aufgenommen werden kann.

Damit kann vermieden werden, dass der mit Produkten 7 gefüllte Klebebinder 9 angehalten werden muss.
Wesentlich ist, dass die Druckprodukte 13 im Bereich der Kühlstrecke 14 mit dem oben genannten Code 30 versehen sind. Auch bei Störungen oder anderen Unregelmässigkeiten im Bereich der Kühlstrecke 14 kann jedes Druckprodukt 13 anhand des Codes 30 identifiziert werden. Für die Anlagensteuerung 26 ist es nicht möglich, die Druckprodukte 13 im Bereich der Kühlstrecke 14 zu kontrollieren. Es ist auch unmöglich zu erkennen, ob ein Druckprodukt 13 im Bereich der Kühlstrecke 14 entfernt wurde und somit fehlt. Ebenso ist es für die Anlagensteuerung 26 nicht möglich, den Austausch von zwei Druckprodukten 13 zu erkennen.

Nach der Kühlstrecke 14 werden die Druckprodukte 13 in einer Schneidmaschine 17 beschnitten. Diese Schneidmaschine 17 ist insbesondere ein Dreischneider, der die Druckprodukte 13 an den drei offenen Seiten beschneidet. Der eigentliche Fertigungsprozess ist damit abgeschlossen.

Nach der Schneidmaschine 17 werden die Druckprodukte 13 auf einem Transportband 18 einem Stapler 19 zugeführt, in dem die Druckprodukte 13 gestapelt und um 90° umgelenkt werden. In einem Entstapler 20 werden anschliessend die Druckprodukte 13 wieder entstapelt und einer Einsteckmaschine 21 zugeführt. Gleichzeitig werden die Codes 30 der Druckprodukte 13 mit einem Leser 22 gelesen, der über eine Steuerleitung 27 mit der Anlagensteuerung 26 verbunden ist. Die Einsteckmaschine 21 fügt nun den Druckprodukten 13 entsprechend der Empfängeradresse eine hier nicht gezeigte Beilage hinzu. Da die Druckprodukte 13 anhand der Codes 30 mit Hilfe der Anlagensteuerung 26 und dem Leser 22 identifiziert werden, sind je nach Empfänger unterschiedliche Beilagen oder auch keine Beilagen möglich. Dem Druckprodukt 13 für Herrn Müller kann beispielsweise die Beilage A und dem Druckprodukt 13 für Herrn Meier die Beilage B hinzugefügt werden. Schliesslich werden die Druckprodukte 13 mit einem Drucker 25, ebenfalls über die Steuerleitung 27, die mit der Anlagensteuerung 26 verbunden ist, mit der zugehörigen Anschrift bedruckt.

Anschliessend können die Druckprodukte 13 in einer Foliermaschine 23 foliert und einem Stapler 24 zugeführt werden. Mit einem Band 28 erfolgt die versandbereite Ausgabe der gestapelten Druckprodukte 13. In diesen Stapeln sind die Druckprodukte 13 vorzugsweise postroutengerecht geordnet. Ein solcher Stapel enthält beispielsweise sämtliche Druckprodukte 13, die ein Postbote auf seiner klar definierten Route in die Briefkästen zu legen hat.

## Patentansprüche

1. Verfahren zur Produktion von nach gespeicherten oder eingegebenen Daten hergestellten Druckprodukten ähnlicher Art, die zu ihrer Identifikation mit einem maschinell lesbaren Code versehen sind, **dadurch gekennzeichnet, dass** eine Aussenseite der Druckprodukte mit einem visuell nicht erkennbaren, jedoch maschinell lesbaren Code versehen wird oder dass ein visuell erkennbarer Code (30) aufgedruckt wird, der bei der Weiterverarbeitung wieder entfernt wird.

2. Verfahren nach Anspruch 1, **dadurch gekennzeichnet, dass** der maschinell lesbare Code (30) aus Punkten (31) besteht, die so klein sind, dass sie visuell nicht erkennbar sind.

3. Verfahren nach Anspruch 1 oder 2, **dadurch gekennzeichnet, dass** der Code als Punktmatrix, vorzugsweise als rechteckige Punktmatrix ausgebildet ist.

4. Verfahren nach Anspruch 3, **dadurch gekennzeichnet, dass** der Quotient aus einer Distanz (D) zwischen Punkten (31) und einem Punktdurchmesser wenigstens 5 ist.

5. Verfahren nach einem der Ansprüche 1 bis 4, **dadurch gekennzeichnet, dass** der Code (30) aus einer visuell nicht sichtbaren Tinte hergestellt wird.

6. Verfahren nach Anspruch 5, **dadurch gekennzeichnet, dass** die Tinte UV- oder IR-reflektierend ist.

7. Verfahren nach einem der Ansprüche 1 bis 6, **dadurch gekennzeichnet, dass** der Code (30) auf einer flachen Aussenseite (29a), dem Rücken (29b) oder auf einer beschnittenen Seite (13a) der Druckprodukte (13) aufgebracht wird.

8. Druckprodukt, hergestellt nach dem Verfahren gemäss Anspruch 1, **gekennzeichnet durch** einen visuell nicht erkennbaren Code (30), wobei der Code (30) das Druckprodukt (13) identifiziert.

9. Druckprodukt nach Anspruch 8, **dadurch gekennzeichnet, dass** der Code (30) eine Punktematrix ist.

10. Anlage zur Durchführung des Verfahrens gemäss Anspruch 1, bestehend aus einer Datenbank, die über produktebezogene Daten verfügt, einer Vorrichtung (12) zum Aufbringen visuell nicht sichtbarer Codes (30) auf den Druckprodukten (13) sowie wenigstens einer Vorrichtung (22) zum Lesen eines Codes (30).
